(19) Europäisches Patentamt
European Patent Office
Office européen des brevets

(11) **EP 2 749 968 A1**

(12) **EUROPEAN PATENT APPLICATION**
published in accordance with Art. 153(4) EPC

(43) Date of publication:
**02.07.2014 Bulletin 2014/27**

(51) Int Cl.:
***G04G 5/00*** *(2013.01)*  ***H04L 7/00*** *(2006.01)*

(21) Application number: **12838784.2**

(22) Date of filing: **27.09.2012**

(86) International application number:
**PCT/JP2012/074833**

(87) International publication number:
**WO 2013/051446 (11.04.2013 Gazette 2013/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.10.2011 JP 2011221470**

(71) Applicant: **Sony Corporation
Tokyo 108-0075 (JP)**

(72) Inventors:
• **HAMAMATSU Toshihiko
Minato-ku, Tokyo 108-0075 (JP)**

• **SOMEYA Ikuo
Minato-ku, Tokyo 108-0075 (JP)**
• **KOJIMA Toshiaki
Minato-ku, Tokyo 108-0075 (JP)**

(74) Representative: **Jackson, Jonathan Andrew
D Young & Co LLP
120 Holborn
London EC1N 2DY (GB)**

(54) **TIME CONTROL DEVICE, TIME CONTROL METHOD, AND PROGRAM**

(57)  The present disclosure relates to a time control device, a time control method, and a program that can synchronize time information with a master device in a network with high precision.

The time control device of the present disclosure includes : a calculating unit that calculates a time difference from the master device and a network delay based on the transmission times and the reception times of messages exchanged with the master device, the network delay indicating the period of time required for communicating the messages via the network; a PID processing unit that generates a feedback control value f1 based on the calculated time difference, the feedback control value f1 being used for performing feedback control on time information about the slave device; a f0 generating unit that generates a feedback control value f0 based on the generated feedback control value f1; and an adjusting unit that adjusts the time information about the slave device in accordance with the feedback control value f1 or the feedback control value f0, whichever is selected based on the calculated network delay. The present disclosure can be applied to a PTP slave, for example.

FIG. 3

**Description**

TECHNICAL FIELD

The present disclosure relates to time control devices, time control methods, and programs, and more particularly, to a time control device, a time control method, and a program that are suitably used for synchronizing time information with a master device in a network with high precision.

BACKGROUND ART

There have been mechanisms for synchronizing time information between devices connected to each other via a network, and one of the known examples of such mechanisms is IEEE1588 PTP (precision time protocol) (see Patent Document 1, for example).

According to IEEE1588 PTP, PTP messages are exchanged between a master device (hereinafter referred to as the PTP master) and a slave device (hereinafter referred to as the PTP slave) connected to each other via a network, so that time information $T2$ about the PTP salve can be synchronized with time information $T1$ about the PTP master with high precision on the order of submicroseconds. Specifically, an oscillation frequency $F2$ in the PTP slave can be synchronized with an oscillation frequency $F1$ in the PTP master, and after that, the time information $T2$ can be synchronized with the time information $T1$.

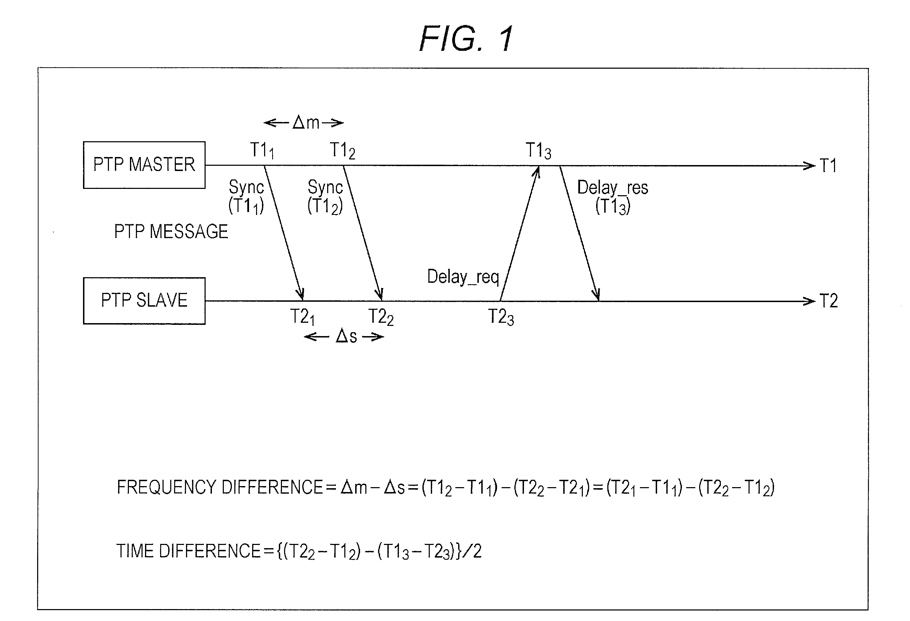

Fig. 1 shows an outline of a conventional high-precision time synchronization process using IEEE1588 PTP.

The PTP master is designed to transmit a Sync message as a PTP message containing a time stamp indicating a transmission time $T1_i$ over a network at predetermined intervals $\Delta m$ based on the oscillation frequency $F1$. Meanwhile, the PTP slave is designed to receive the Sync message transmitted from the PTP master, extract the time stamp indicating the transmission time $T1_i$ contained therein, and acquire the reception time $T2_i$ thereof. That is, the PTP slave obtains a transmission time $T1_i$ and a reception time $T2i$ every time receiving a Sync packet.

The PTP slave is also designed to transmit a Delay_req as a PTP message to the PTP master via a network, and store the transmission time $T2_X$ thereof. Having received the Delay_req, the PTP master returns a Delay_res as a PTP message containing a time stamp indicating the reception time $T1_X$ to the PTP slave. That is, the PTP slave obtains the transmission time $T2_X$ and the reception time $T1_X$ of the Delay_req by transmitting the Delay_req and receiving the Delay_res returned from the PTP master in response to the Delay_req.

Here, it is assumed that the time required to communicate a PTP message such as a Sync message, a Delay_req, or a Delay_res via a network (hereinafter referred to as the network delay) does not vary but is constant.

In this case, if the oscillation frequency $F2$ of the PTP slave is perfectly synchronized with the oscillation frequency $F1$ of the PTP master, the Sync message transmission intervals $\Delta m = T1_2 - T1_1$ in the PTP master are the same as the Sync message reception intervals $\Delta s = T2_2 - T2_1$ in the PTP slave. In other words, in a case where the difference $\Delta m - \Delta s$ between $\Delta m$ and $\Delta s$ is not 0, the oscillation frequency $F2$ of the PTP slave differs from the oscillation frequency $F1$ of the PTP master, and synchronization is not established.

Therefore, to establish frequency synchronization, the oscillation frequency $F2$ of the PTP slave should be adjusted so that the difference $\Delta m - \Delta s$ between $\Delta m$ and $\Delta s$ will become 0. Hereinafter, the difference $\Delta m - \Delta s$ between $\Delta m$ and $\Delta s$ will be referred to as the frequency difference. The frequency difference is calculated according to the following equation (1).

$$\text{Frequency difference } \Delta m - \Delta s = (T1_2 - T1_1) - (T2_2 - T2_1)$$
$$= (T2_1 - T1_1) - (T2_2 - T1_2) \ \ldots \ (1)$$

To establish time synchronization, the PTP slave transmits a Delay_req after frequency synchronization is established as described above, and receives a Delay_res as a response, to obtain the transmission time $T2_3$ and the reception time $T1_3$ of the Delay_req.

Where the difference between the time information $T1$ about the PTP master and the time information $T2$ about the PTP slave is the time difference, the equations (2) and (3) shown below are satisfied, and the equation (4) also shown below is determined from the equations (2) and (3).

Reception time $T2_2$ - transmission time $T1_2$ = network

$$\text{delay + time difference } \ldots \ (2)$$

$$\text{Reception time } T1_3 - \text{transmission time } T2_3 = \text{network}$$
$$\text{delay} - \text{time difference} \dots (3)$$

$$\text{Time difference} = \{(T2_2 - T1_3) - (T1_2 - T2_3)\}/2 \dots (4)$$

In the PTP slave, the time information T2 should be adjusted so that the time difference expressed by the equation (4) will be 0.

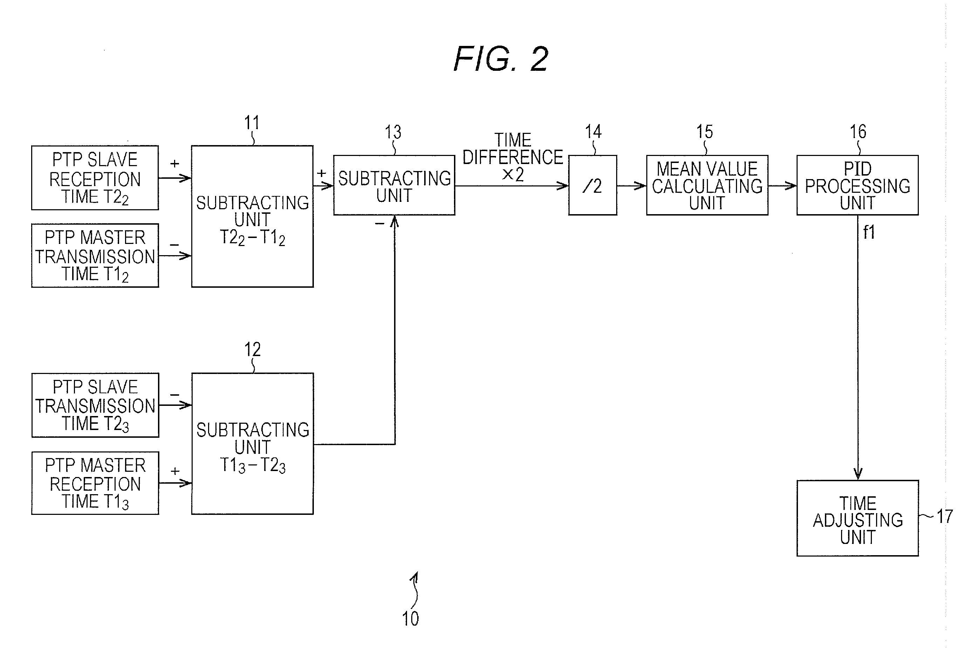

Fig. 2 shows an example structure of a time control device for establishing time synchronization in the PTP slave.

This time control device 10 includes subtracting units 11, 12, and 13, a dividing unit 14, a mean value calculating unit 15, a PID (proportional integral differential) processing unit 16, and a time adjusting unit 17.

The subtracting unit 11 calculates the reception time $T2_2$ - the transmission time $T1_2$ as shown in the above equation (2), and outputs the result to the subtracting unit 13. The subtracting unit 12 calculates the reception time $T2_3$ - the transmission time $T1_3$ as shown in the above equation (3), and outputs the result to the subtracting unit 13. The subtracting unit 13 and the dividing unit 14 calculate the time difference expressed by the above equation (4), and outputs the result to the mean value calculating unit 15.

The mean value calculating unit 15 sequentially stores a predetermined number of time differences that are input form the dividing unit 14 in the previous stage. Every time a time difference is input from the dividing unit 14, the mean value among the input time difference and the predetermined number of stored time differences is calculated and is output to the PID processing unit 16.

The PID processing unit 16 receives an input of the mean time difference from the mean value calculating unit 15, calculates a feedback control value f1 for performing PID control on the time adjusting unit 17 in a later stage, and outputs the calculation result to the time adjusting unit 17. The time adjusting unit 17 adjusts the time information T2 based on the feedback control value f1.

CITATION LIST

PATENT DOCUMENT

Patent Document 1: Japanese Patent Application Laid-Open No. 2010-190635

SUMMARY OF THE INVENTION

PROBLEMS TO BE SOLVED BY THE INVENTION

When high-capacity packets such as video signals flow in the network to which the PTP master and the PTP slave are connected, a congestion occurs in the network, and the network delay of the above described PTP messages might temporarily become longer.

In such a case, the above described assumption that "the network delay of the PTP messages does not vary but is constant" is not satisfied. Therefore, frequency synchronization and time synchronization cannot be accurately established by the above described method.

The present disclosure is made in view of those circumstances, and aims to synchronize time information with a master device in a network with high precision.

SOLUTIONS TO PROBLEMS

A time control device as one aspect of the present disclosure is a time control device that is installed in a slave device, and synchronizes time information with a master device to which the slave device is connected via a network. The time control device includes: a calculating unit that calculates a time difference from the master device and a network delay based on the transmission times and the reception times of messages exchanged with the master device, the network delay indicating the period of time required for communicating the messages via the network; a PID processing unit that generates a feedback control value f1 based on the calculated time difference, the feedback control value f1 being used for performing feedback control on time information about the slave device; a f0 generating unit that generates a feedback control value f0 based on the generated feedback control value f1; and an adjusting unit that adjusts the time information about the slave device in accordance with the feedback control value f1 or the feedback control value f0, whichever is selected based on the calculated network delay.

The adjusting unit may adjust the time information about the slave device in accordance with the feedback control value f1 when the calculated network delay is within a predetermined range from the minimum network delay value, and may adjust the time information about the slave device in accordance with the feedback control value f0 when the calculated network delay is outside the predetermined range from the minimum network delay value.

The f0 generating unit may generate the feedback control value f0 by calculating the mean value of feedback control values f1 generated when a predetermined condition is satisfied.

The f0 generating unit may generate the feedback control value f0 by calculating the mean value of feedback control values f1 generated when the calculated time difference is 0.

The f0 generating unit may generate the feedback control value f0 by calculating the mean value of feedback control values f1 generated when the calculated time difference is smaller than a predetermined threshold value.

The f0 generating unit may generate the feedback control value f0 by calculating the mean value of feedback control values f1 generated when the calculated network delay is smaller than a predetermined threshold value.

During a predetermined operation start period, the f0 generating unit may generate the feedback control value f0 by calculating the mean value of feedback control values f1 generated when the calculated time difference is smaller than a predetermined threshold value, and, after the predetermined operation start period, the f0 generating unit may generate the feedback control value f0 by calculating the mean value of feedback control values f1 generated when the calculated time difference is 0.

During a predetermined operation start period, the f0 generating unit may generate the feedback control value f0 by calculating the mean value of feedback control values f1 generated when the calculated time difference is smaller than a first threshold value, and, after the predetermined operation start period, the f0 generating unit may generate the feedback control value f0 by calculating the mean value of feedback control values f1 generated when the calculated time difference is smaller than a second threshold value that is smaller than the first threshold value.

During a predetermined operation start period, the f0 generating unit may generate the feedback control value f0 by calculating the mean value of feedback control values f1 generated when the calculated network delay is smaller than a first threshold value, and, after the predetermined operation start period, the f0 generating unit may generate the feedback control value f0 by calculating the mean value of feedback control values f1 generated when the calculated network delay is smaller than a second threshold value that is smaller than the first threshold value.

A time control method as one aspect of the present disclosure is a time control method implemented in a time control device that is installed in a slave device, and synchronizes time information with a master device to which the slave device is connected via a network. The time control method includes: a calculating step of calculating a time difference from the master device and a network delay based on the transmission times and the reception times of messages exchanged with the master device, the network delay indicating the period of time required for communicating the messages via the network; a PID processing step of generating a feedback control value f1 based on the calculated time difference, the feedback control value f1 being used for performing feedback control on time information about the slave device; a f0 generating step of generating a feedback control value f0 based on the generated feedback control value f1; and an adjusting step of adjusting the time information about the slave device in accordance with the feedback control value f1 or the feedback control value f0, whichever is selected based on the calculated network delay, the steps being carried out by the time control device.

A program as one aspect of the present disclosure is a program to be executed by a computer that is installed in a slave device, and synchronizes time information with a master device to which the slave device is connected via a network. The program causes the computer to function as: a calculating unit that calculates a time difference from the master device and a network delay based on the transmission times and the reception times of messages exchanged with the master device, the network delay indicating the period of time required for communicating the messages via the network; a PID processing unit that generates a feedback control value f1 based on the calculated time difference, the feedback control value f1 being used for performing feedback control on time information about the slave device; a f0 generating unit that generates a feedback control value f0 based on the generated feedback control value f1; and an adjusting unit that adjusts the time information about the slave device in accordance with the feedback control value f1 or the feedback control value f0, whichever is selected based on the calculated network delay.

In one aspect of the present disclosure, a time difference from the master device and a network delay indicating the period of time required for communicating messages via a network are calculated based on the transmission times and the reception times of the messages exchanged with the master device. A feedback control value f1 for performing feedback control on the time information about the slave device is generated based on the calculated time difference. A feedback control value f0 is generated based on the generated feedback control value f1. The time information about the slave device is adjusted in accordance with the feedback control value f1 or the feedback control value f0, whichever is selected based on the calculated network delay.

EFFECTS OF THE INVENTION

According to one aspect of the present disclosure, time information can be synchronized with a master device in a network with high precision.

BRIEF DESCRIPTION OF DRAWINGS

Fig. 1 is a diagram showing an outline of a conventional high-precision time synchronization process using IEEE1588 PTP.

Fig. 2 is a block diagram showing an example structure of a conventional time control device.

Fig. 3 is a block diagram showing an example structure of a time control device to which the present disclosure is applied.

Fig. 4 is a block diagram showing a first example structure of the f0 generating unit shown in Fig. 3.

Fig. 5 is a flowchart for explaining an operation of the time control device shown in Fig. 3.

Fig. 6 is a block diagram showing a second example structure of the f0 generating unit shown in Fig. 3.

Fig. 7 is a block diagram showing an example structure of a computer.

MODES FOR CARRYING OUT THE INVENTION

The following is a detailed description of the best modes for carrying out the present disclosure (hereinafter referred to as embodiments), with reference to the drawings.

A time control device that is an embodiment of the present disclosure is included in a PTP slave (a slave device) that exchanges PTP messages with a PTP master (a master device) in a network so as to have time information synchronized with the PTP master. It is assumed that, prior to synchronization of time information with the PTP master, the oscillation frequency F2 of the PTP slave has already been synchronized with the oscillation frequency F1 of the PTP master with high precision.

[Example Structure of the Time Control Device]

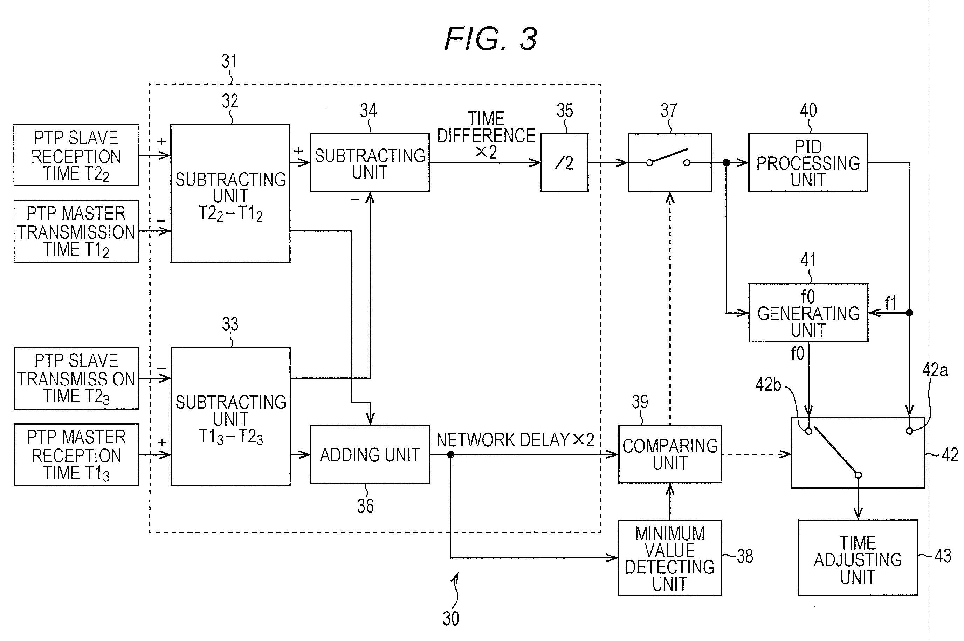

Fig. 3 shows an example structure of the time control device as an embodiment. This time control device 30 includes a network delay/time difference calculating unit 31, a switch 37, a minimum value detecting unit 38, a comparing unit 39, a PID processing unit 40, an f0 generating unit 41, a selector 42, and a time adjusting unit 43.

The network delay/time difference calculating unit 31 includes subtracting units 32 through 34, a dividing unit 35, and an adding unit 36.

The subtracting unit 32 calculates the reception time $T2_2$ - the transmission time $T1_2$ as shown in the above equation (2), and outputs the result to the subtracting unit 34 and the adding unit 36. The subtracting unit 33 calculates the reception time $T2_3$ - the transmission time $T1_3$ as shown in the above equation (3), and outputs the result to the subtracting unit 34 and the adding unit 36. The subtracting unit 34 and the dividing unit 35 calculate a time difference according to the above equation (4), and output the time difference to the switch 37. The adding unit 36 calculates the network delay $\times$ 2 by adding the above equation (2) and the above equation (3), and outputs the result to the minimum value detecting unit 38 and the comparing unit 39.

The switch 37 is switched on and off under the control of the comparing unit 39, and outputs the time difference input from the dividing unit 35 of the network delay/time difference calculating unit 31 to the PID processing unit 40 and the f0 generating unit 41.

The minimum value detecting unit 38 constantly monitors the network delay $\times$ 2, which is input from the adding unit 36 of the network delay/time difference calculating unit 31. If the input value is smaller than the stored minimum value, the stored minimum value is updated with the input value. The minimum value detecting unit 38 also notifies the comparing unit 39 of the stored minimum value.

The comparing unit 39 determines whether the network delay $\times$ 2, which is input from the adding unit 36, is equal to or smaller than a predetermined threshold value based on the minimum value stored in the minimum value detecting unit 38, and then controls the switch 37 and the selector 42 based on the determination result. Specifically, if the determination result is positive, the switch 37 is switched on, and the selector 42 is switched to an input terminal 42a. If the determination result is negative, on the other hand, the switch 37 is switched off, and the selector 42 is switched to an input terminal 42b.

The PID processing unit 40 receives an input of the time difference from the network delay/time difference calculating unit 31 via the switch 37, calculates a feedback control value f1 for performing PID control on the time adjusting unit 43 in a later stage, and outputs the feedback control value f1 to the input terminal 42a of the selector 42 and the f0 generating unit 41.

Among the feedback control values f1 that are sequentially input from the PID processing unit 40, the f0 generating unit 41 stores the feedback control values f1 that are input when the time difference input from the network delay/time difference calculating unit 31 via the switch 37 satisfies a predetermined condition. The f0 generating unit 41 also calculates a feedback control value f0 by obtaining the mean value of the stored feedback control values f1, and outputs the feedback control value f0 to the input terminal 42b of the selector 42.

Under the control of the comparing unit 39, the selector 42 outputs the feedback control value f1 that is input to the input terminal 42a, or the feedback control value f0 that is input to the input terminal 42b, to the time adjusting unit 43. The time adjusting unit 43 adjusts the time information T2 about the internal clock based on the feedback control value f0 or the feedback control value f1.

[First Example Structure of the f0 Generating Unit 41]

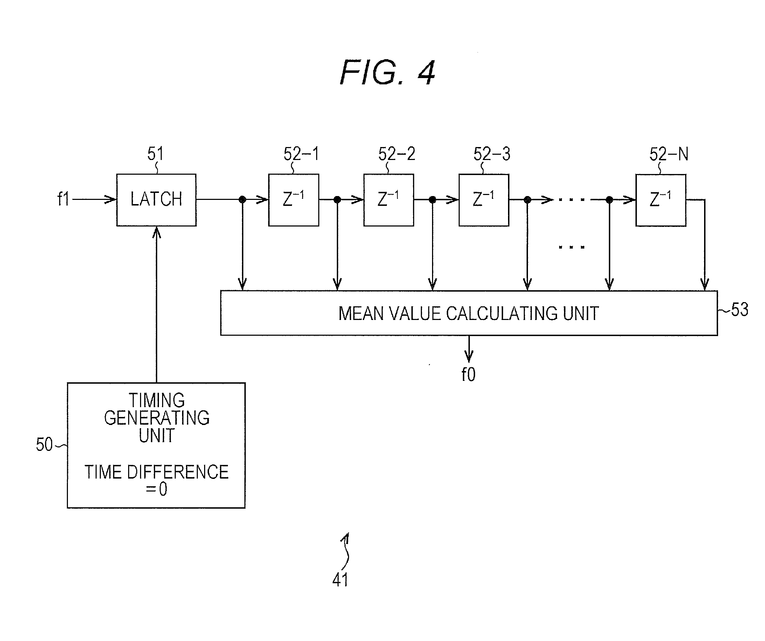

Fig. 4 shows a first example structure of the f0 generating unit 41.

The first example structure of the f0 generating unit 41 includes a timing generating unit 50, a latch 51, delaying units 52-1 through 52-N, and a mean value calculating unit 53.

The timing generating unit 50 monitors the time difference that is input from the networkdelay/time difference calculating unit 31 via the switch 37, and outputs a control signal to the latch 51 when the time difference is 0.

Among the feedback control values f1 that are sequentially input from the PID processing unit 40, the latch 51 outputs the feedback control values f1 that are input when the control signal is input from the timing generating unit 50, to the delaying unit 52-1 and the mean value calculating unit 53.

When a feedback control value f1 is input from the latch 51, the delaying unit 52-1 outputs the feedback control value f1 that has been stored so far therein to the delaying unit 52-2 in a later stage and the mean value calculating unit 53, and stores the feedback control value f1 that is input from the latch 51. Likewise, when a feedback control value f1 is input from the previous stage, each of the delaying units 51-2 through 52-N outputs the feedback control value f1 that has been stored so far therein to a later stage, and stores the feedback control value f1 that is input from the previous stage.

The mean value calculating unit 53 calculates the mean value of the (N + 1) feedback control values f1 that are input from the latch 51 and the delaying units 52-1 through 52-N, and outputs the mean value to the input terminal 42b of the selector 42.

The timing generating unit 50 may not output the control signal to the latch 51 when the time difference is 0, but may output the control signal to the latch 51 when the time difference is smaller than a predetermined threshold value. Alternatively, the network delay calculated by the adding unit 36 maybe input to the timing generating unit 50, and the control signal may be output to the latch 51 when the network delay is smaller than a predetermined threshold value.

[Description of Operation]

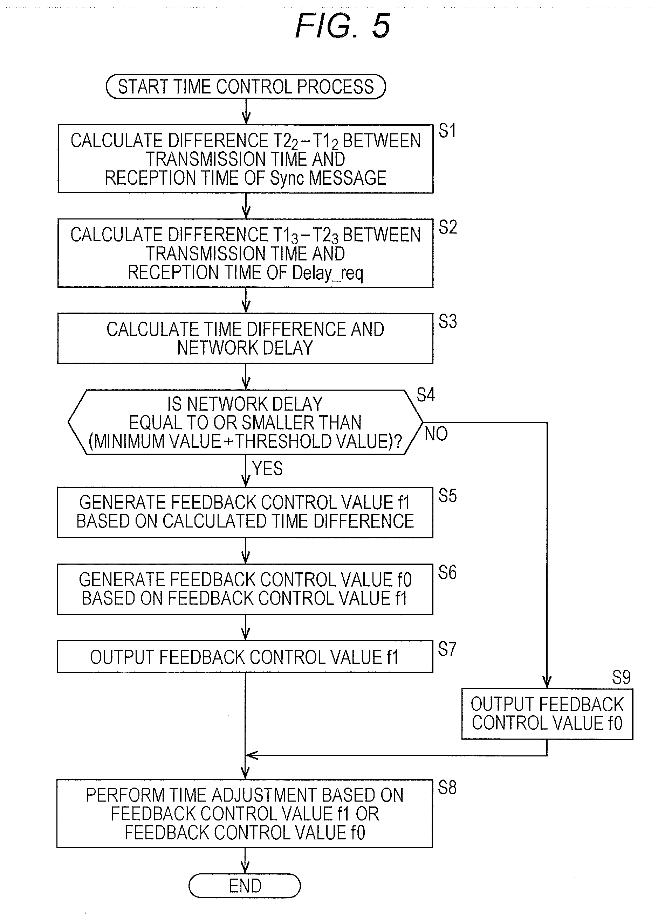

Next, an operation of the time control device 30 is described. Fig. 5 is a flowchart for explaining a time control process to be performed by the time control device 30.

This time control process is performed at regular intervals. In step S1, the subtracting unit 32 of the network delay/time difference calculating unit 31 calculates the reception time $T2_2$ - the transmission time $T1_2$ as shown in the above equation (2), and outputs the result to the subtracting unit 34 and the adding unit 36. In step S2, the subtracting unit 33 calculates the reception time $T2_3$ - the transmission time $T1_3$ as shown in the above equation (3), and outputs the result to the subtracting unit 34 and the adding unit 36.

In step S3, the subtracting unit 34 and the dividing unit 35 calculate a time difference according to the above equation (4), and output the time difference to the switch 37. The adding unit 36 calculates the network delay $\times$ 2 by adding the above equation (2) and the above equation (3), and outputs the result to the minimum value detecting unit 38 and the comparing unit 39.

In step S4, the comparing unit 39 determines whether the network delay $\times$ 2, which has been input from the adding unit 36, is equal to or smaller than a predetermined threshold value based on the minimum value stored in the minimum value detecting unit 38. If the determination result is positive at this point, the process moves on to step S5.

In step S5, the switch 37 is switched on under the control of the comparing unit 39. Based on the time difference that has been input from the network delay/time difference calculating unit 31 via the switch 37, the PID processing unit 40 calculates a feedback control value f1 for performing PID control on the time adjusting unit 43, and outputs the feedback control value f1 to the input terminal 42a of the selector 42 and the f0 generating unit 41.

In step S6, the f0 generating unit 41 also calculates a feedback control value f0 based on feedback control values f1 that have been sequentially input from the PID processing unit 40, and outputs the feedback control value f0 to the input terminal 42b of the selector 42.

In step S7, the selector 42 is switched to the input terminal 42a under the control of the comparing unit 39, and outputs the feedback control value f1 to the time adjusting unit 43. In step S8, the time adjusting unit 43 adjusts the time information T2 about the internal clock based on the feedback control value f1.

If the determination result in step S4 is negative, the process moves on to step S9. In step S9, the switch 37 is switched off under the control of the comparing unit 39. Also, the selector 42 is switched to the input terminal 42b under the control of the comparing unit 39, and outputs the feedback control value f0 generated in step S6 to the time adjusting unit 43. The time control process then comes to an end.

As described above, in the time control process to be performed by the time control device 30, the time adjusting unit 43 adjusts the time information T2 based on the feedback control value f0 that is the mean value of feedback control values f1 obtained when the time difference is 0, even in a case where a network delay is long (or where a network delay × 2 is equal to or greater than a predetermined threshold value). Accordingly, the difference from the time information T1 about the master device can be made smaller than that in a conventional case where time adjustment is not performed when a network delay is long (or where a network delay × 2 is equal to or greater than a predetermined threshold value).

[Second Example Structure of the f0 Generating Unit 41]

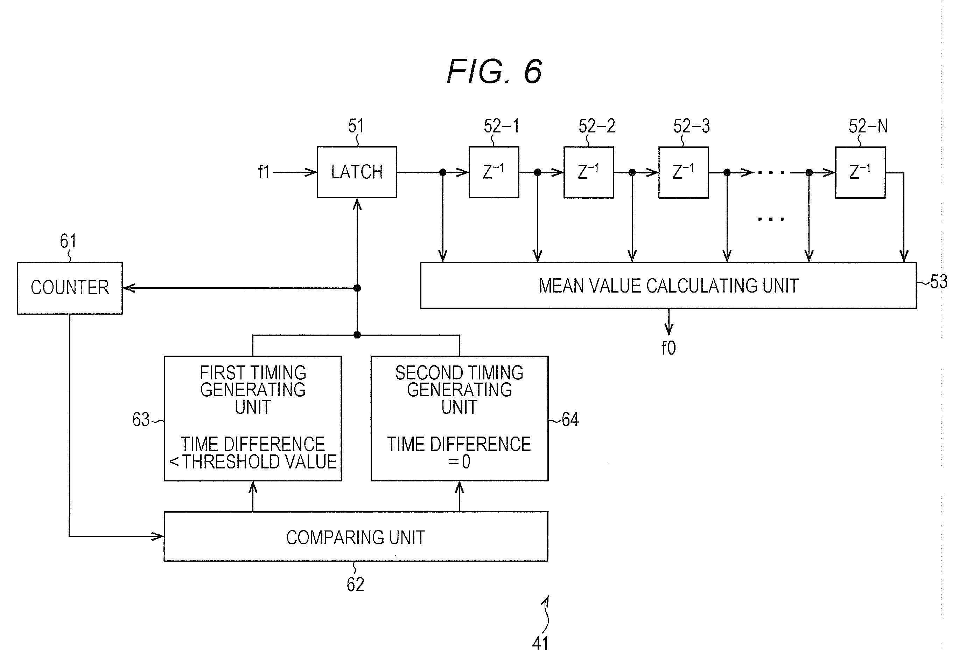

Fig. 6 shows a second example structure of the f0 generating unit 41.

The second example structure of the f0 generating unit 41 includes a counter 61, a comparing unit 62, a first timing generating unit 63, a second timing generating unit 64, a latch 51, delaying units 52-1 through 52-N, and a mean value calculating unit 53.

The counter 61 is reset to 0 at the start of an operation of the time control device 30. After that, the counter 61 increments its counter value by 1 every time a feedback control value f1 is input from the PID processing unit 40, and notifies the comparing unit 62 of the count value. The comparing unit 62 compares the count value of the counter 61 with a predetermined fixed value, and causes the first timing generating unit 63 or the second timing generating unit 64 to operate in accordance with the comparison result. Specifically, the first timing generating unit 63 is made to operate before the count value exceeds the predetermined fixed value, and the second timing generating unit 64 is made to operate after the count value exceeds the predetermined fixed value.

The first timing generating unit 63 monitors the time difference that is input from the network delay/time difference calculating unit 31 via the switch 37, and outputs a control signal to the latch 51 when the time difference is smaller than a predetermined threshold value (a positive value).

The second timing generating unit 64 monitors the time difference that is input from the network delay/time difference calculating unit 31 via the switch 37, and outputs the control signal to the latch 51 when the time difference is 0.

The latch 51, the delaying units 52-1 through 52-N, and the mean value calculating unit 53 are the same as those of the first example structure of the f0 generating unit 41 shown in Fig. 4, and therefore, explanation of them is not repeated herein.

In the second example structure of the f0 generating unit 41, the frequency of generation of the control signal for the latch 51 in the initial stage at the start of an operation of the time control device 30 is higher than that in the first example structure of the f0 generating unit 41 shown in Fig. 4. Accordingly, the feedback control value f0 can be generated more quickly. The feedback control value f0 generated at this point is not based on a feedback control value f1 with respect to the time difference 0, and each feedback control value f1 includes an error (positive/negative random distribution). However, the feedback control value f0 is the mean value of feedback control values f1, and accordingly, the errors can be expected to cancel each other out and decrease.

In view of this, in a case where the network delay × 2 is greater than a predetermined threshold value based on the minimum value stored in the minimum value detecting unit 38 and a feedback control value f0 is input to the time adjusting unit 43, time adjustment can be performed in a shorter period of time than time adjustment in the first example structure.

Furthermore, in a case where the network delay × 2 is equal to or smaller than the predetermined threshold value based on the minimum value stored in the minimum value detecting unit 38, and a feedback control value f1 is input to the time adjusting unit 43, time adjustment can be performed with the same precision as that in the first example structure.

In the above described example, the first timing generating unit 63 determines whether a time difference is smaller than a predetermined threshold value, and the second timing generating unit 64 determines whether a time difference is 0. However, the first timing generating unit 63 may determine whether a time difference is smaller than a predetermined first threshold value, and the second timing generating unit 64 may determine whether a time difference is smaller than a second threshold value that is smaller than the first threshold value.

Alternatively, the first timing generating unit 63 may determine whether a network delay is smaller than a predetermined first threshold value, and the second timing generating unit 64 may determine whether a network delay is smaller than a second threshold value that is smaller than the first threshold value.

The above described series of processes by the time control device 30 can be performed with hardware or software. Where the series of processes are performed with software, the program that forms the software is installed into a computer. Here, the computer may be a computer incorporated into special-purpose hardware, ormaybe a general-purpose personal computer that can execute various kinds of functions as various kinds of programs are installed thereinto.

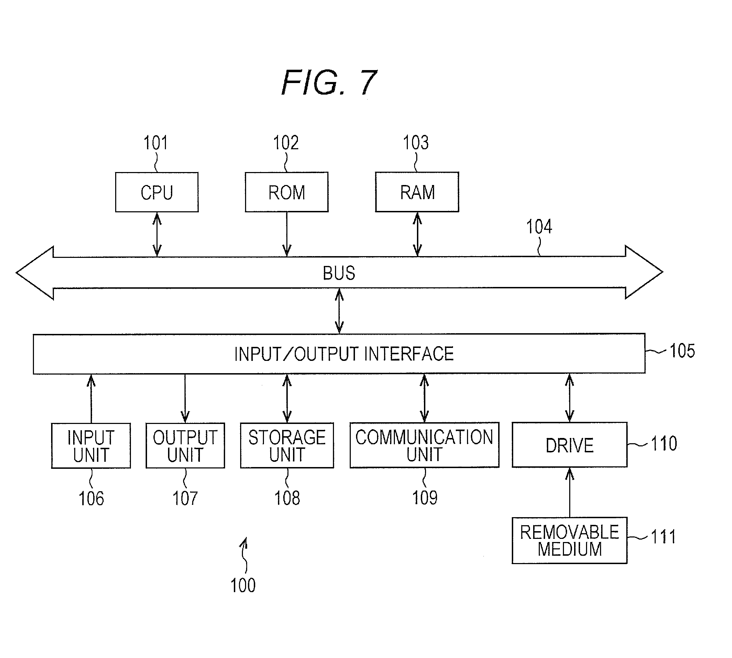

Fig. 7 is a block diagram showing an example structure of the hardware of a computer that performs the above described series of processes in accordance with a program.

In the computer, a CPU (Central Processing Unit) 101, a ROM (Read Only Memory) 102, and a RAM (Random Access Memory) 103 are connected to one another by a bus 104.

An input/output interface 105 is further connected to the bus 104. An input unit 106, an output unit 107, a storage unit 108, a communication unit 109, and a drive 110 are connected to the input/output interface 105.

The input unit 106 is formed with a keyboard, a mouse, a microphone, and the like. The output unit 107 is formed with a display, a speaker, and the like. The storage unit 108 is formed with a hard disk, a nonvolatile memory, or the like. The communication unit 109 is formed with a network interface or the like. The drive 110 drives a removable medium 111 such as a magnetic disk, an optical disk, a magnetooptical disk, or a semiconductor memory.

In the computer having the above described structure, the CPU 101 loads a program stored in the storage unit 108 into the RAM 103 via the input/output interface 105 and the bus 104, and executes the program, so that the above described series of processes are performed.

The program to be executed by the computer (the CPU 101) may be recorded on the removable medium 111 as a package medium to be provided, for example. Alternatively, the program can be provided via a wired or wireless transmission medium such as a local area network, the Internet, or digital satellite broadcasting.

In the computer, the program can be installed into the storage unit 108 via the input/output interface 105 when the removable medium 111 is mounted on the drive 110. The program can also be received by the communication unit 109 via a wired or wireless transmission medium, and be installed into the storage unit 108. Also, the program may be installed beforehand into the ROM 102 or the storage unit 108.

The program to be executed by the computer may be a program for performing processes in chronological order in accordance with the sequence described in this specification, or may be a program for performing processes in parallel or performing a process when necessary, such as when there is a call.

The embodiments of the present disclosure are not limited to the above described embodiments, and various changes may be made to them without departing from the scope of the present disclosure.


REFERENCE SIGNS LIST

| | |
|---|---|
| 30 | Time control device |
| 31 | Network delay/time difference calculating unit |
| 32-34 | Subtracting units |
| 35 | Dividing unit |
| 36 | Adding unit |
| 37 | Switch |
| 38 | Minimum value detecting unit |
| 39 | Comparing unit |
| 40 | PID processing unit |
| 41 | f0 generating unit |
| 42 | Selector |
| 43 | Time adjusting unit |
| 50 | Timing generating unit |
| 51 | Latch |
| 52 | Delaying units |
| 53 | Mean value calculating unit |
| 61 | Counter |
| 62 | Comparing unit |
| 63 | First timing generating unit |
| 64 | Second timing generating unit |

**Claims**

1. A time control device that is installed in a slave device, and synchronizes time information with a master device to which the slave device is connected via a network,
the time control device comprising:

a calculating unit configured to calculate a time difference from the master device and a network delay based on transmission times and reception times of messages exchanged with the master device, the network delay indicating a period of time required for communicating the messages via the network;

a PID processing unit configured to generate a feedback control value f1 based on the calculated time difference, the feedback control value f1 being used for performing feedback control on time information about the slave device;

a f0 generating unit configured to generate a feedback control value f0 based on the generated feedback control value f1; and

an adjusting unit configured to adjust the time information about the slave device in accordance with the feedback control value f1 or the feedback control value f0, whichever is selected based on the calculated network delay.

2. The time control device according to claim 1, wherein,
when the calculated network delay is within a predetermined range from a minimum network delay value, the adjusting unit adjusts the time information about the slave device in accordance with the feedback control value f1, and,
when the calculated network delay is outside the predetermined range from the minimum network delay value, the adjusting unit adjusts the time information about the slave device in accordance with the feedback control value f0.

3. The time control device according to claim 2, wherein the f0 generating unit generates the feedback control value f0 by calculating a mean value of a plurality of feedback control values f1 generated when a predetermined condition is satisfied.

4. The time control device according to claim 3, wherein the f0 generating unit generates the feedback control value f0 by calculating a mean value of a plurality of feedback control values f1 generated when the calculated time difference is 0.

5. The time control device according to claim 3, wherein the f0 generating unit generates the feedback control value f0 by calculating a mean value of a plurality of feedback control values f1 generated when the calculated time difference is smaller than a predetermined threshold value.

6. The time control device according to claim 3, wherein the f0 generating unit generates the feedback control value f0 by calculating a mean value of a plurality of feedback control values f1 generated when the calculated network delay is smaller than a predetermined threshold value.

7. The time control device according to claim 3, wherein,
during a predetermined operation start period, the f0 generating unit generates the feedback control value f0 by calculating a mean value of a plurality of feedback control values f1 generated when the calculated time difference is smaller than a predetermined threshold value, and,
after the predetermined operation start period, the f0 generating unit generates the feedback control value f0 by calculating a mean value of a plurality of feedback control values f1 generated when the calculated time difference is 0.

8. The time control device according to claim 3, wherein,
during a predetermined operation start period, the f0 generating unit generates the feedback control value f0 by calculating a mean value of a plurality of feedback control values f1 generated when the calculated time difference is smaller than a first threshold value, and,
after the predetermined operation start period, the f0 generating unit generates the feedback control value f0 by calculating a mean value of a plurality of feedback control values f1 generated when the calculated time difference is smaller than a second threshold value, the second threshold value being smaller than the first threshold value.

9. The time control device according to claim 3, wherein,
during a predetermined operation start period, the f0 generating unit generates the feedback control value f0 by calculating a mean value of a plurality of feedback control values f1 generated when the calculated network delay is smaller than a first threshold value, and,

after the predetermined operation start period, the f0 generating unit generates the feedback control value f0 by calculating a mean value of a plurality of feedback control values f1 generated when the calculated network delay is smaller than a second threshold value, the second threshold value being smaller than the first threshold value.

10. A time control method implemented in a time control device that is installed in a slave device, and synchronizes time information with a master device to which the slave device is connected via a network, the time control method comprising:

a calculating step of calculating a time difference from the master device and a network delay based on transmission times and reception times of messages exchanged with the master device, the network delay indicating a period of time required for communicating the messages via the network;

a PID processing step of generating a feedback control value f1 based on the calculated time difference, the feedback control value being used for performing feedback control on time information about the slave device;

a f0 generating step of generating a feedback control value f0 based on the generated feedback control value f1; and

an adjusting step of adjusting the time information about the slave device in accordance with the feedback control value f1 or the feedback control value f0, whichever is selected based on the calculated network delay, the steps being carried out by the time control device.

11. A program to be executed by a computer that is installed in a slave device, and synchronizes time information with a master device to which the slave device is connected via a network, the program causing the computer to function as:

a calculating unit configured to calculate a time difference from the master device and a network delay based on transmission times and reception times of messages exchanged with the master device, the network delay indicating a period of time required for communicating the messages via the network;

a PID processing unit configured to generate a feedback control value f1 based on the calculated time difference, the feedback control value f1 being used for performing feedback control on time information about the slave device;

a f0 generating unit configured to generate a feedback control value f0 based on the generated feedback control value f1; and

an adjusting unit configured to adjust the time information about the slave device in accordance with the feedback control value f1 or the feedback control value f0, whichever is selected based on the calculated network delay.

## FIG. 1

$$\text{FREQUENCY DIFFERENCE} = \Delta m - \Delta s = (T1_2 - T1_1) - (T2_2 - T2_1) = (T2_1 - T1_1) - (T2_2 - T1_2)$$

$$\text{TIME DIFFERENCE} = \{(T2_2 - T1_2) - (T1_3 - T2_3)\}/2$$

EP 2 749 968 A1

## FIG. 2

EP 2 749 968 A1

# FIG. 3

EP 2 749 968 A1

# FIG. 4

# FIG. 5

```
( START TIME CONTROL PROCESS )
                  │
                  ▼
┌─────────────────────────────────────────┐  S1
│  CALCULATE DIFFERENCE $T2_2 - T1_2$ BETWEEN │
│         TRANSMISSION TIME AND            │
│     RECEPTION TIME OF Sync MESSAGE       │
└─────────────────────────────────────────┘
                  │
                  ▼
┌─────────────────────────────────────────┐  S2
│  CALCULATE DIFFERENCE $T1_3 - T2_3$ BETWEEN │
│         TRANSMISSION TIME AND            │
│     RECEPTION TIME OF Delay_req          │
└─────────────────────────────────────────┘
                  │
                  ▼
┌─────────────────────────────────────────┐  S3
│       CALCULATE TIME DIFFERENCE AND      │
│              NETWORK DELAY               │
└─────────────────────────────────────────┘
                  │
                  ▼
         ╱─────────────────────╲  S4
        ╱    IS NETWORK DELAY    ╲
       ╱  EQUAL TO OR SMALLER THAN ╲────────────┐
       ╲ (MINIMUM VALUE+THRESHOLD   ╱ NO         │
        ╲      VALUE)?             ╱             │
         ╲───────────────────────╱              │
                  │ YES                          │
                  ▼                              │
┌─────────────────────────────────────────┐  S5 │
│   GENERATE FEEDBACK CONTROL VALUE f1     │    │
│   BASED ON CALCULATED TIME DIFFERENCE    │    │
└─────────────────────────────────────────┘    │
                  │                              │
                  ▼                              │
┌─────────────────────────────────────────┐  S6 │
│   GENERATE FEEDBACK CONTROL VALUE f0     │    │
│   BASED ON FEEDBACK CONTROL VALUE f1     │    │
└─────────────────────────────────────────┘    │
                  │                              │
                  ▼                              │
┌─────────────────────────────────────────┐  S7 │
│     OUTPUT FEEDBACK CONTROL VALUE f1     │    │
└─────────────────────────────────────────┘    │
                  │                              ▼              S9
                  │                   ┌──────────────────┐
                  │                   │ OUTPUT FEEDBACK  │
                  │                   │ CONTROL VALUE f0 │
                  │                   └──────────────────┘
                  │◄──────────────────────────┘
                  ▼
┌─────────────────────────────────────────┐  S8
│   PERFORM TIME ADJUSTMENT BASED ON       │
│      FEEDBACK CONTROL VALUE f1 OR        │
│        FEEDBACK CONTROL VALUE f0         │
└─────────────────────────────────────────┘
                  │
                  ▼
             (    END    )
```

FIG. 6

EP 2 749 968 A1

## FIG. 7

RAM 103
ROM 102
CPU 101

BUS 104

INPUT/OUTPUT INTERFACE 105

INPUT UNIT 106
OUTPUT UNIT 107
STORAGE UNIT 108
COMMUNICATION UNIT 109
DRIVE 110
REMOVABLE MEDIUM 111

100

## INTERNATIONAL SEARCH REPORT

| International application No. |
| --- |
| PCT/JP2012/074833 |

**A. CLASSIFICATION OF SUBJECT MATTER**
*G04G5/00*(2006.01)i, *H04L7/00*(2006.01)i

According to International Patent Classification (IPC) or to both national classification and IPC

**B. FIELDS SEARCHED**

Minimum documentation searched (classification system followed by classification symbols)
G04G5/00, H04L7/00

Documentation searched other than minimum documentation to the extent that such documents are included in the fields searched
Jitsuyo Shinan Koho        1922–1996    Jitsuyo Shinan Toroku Koho    1996–2012
Kokai Jitsuyo Shinan Koho  1971–2012    Toroku Jitsuyo Shinan Koho    1994–2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2007-174676 A (Agilent Technologies Inc.), 05 July 2007 (05.07.2007), paragraphs [0001] to [0028]; fig. 1, 2 & US 2007/0147435 A1    & EP 1802015 A1 & CN 001997027 A | 1-11 |
| A | JP 2010-197320 A (Sony Corp.), 09 September 2010 (09.09.2010), paragraphs [0001] to [0047]; fig. 1, 2, 8 to 10 & US 2010/0220748 A1    & CN 101820500 A | 1-11 |
| A | JP 2001-116865 A (Toshiba Corp.), 27 April 2001 (27.04.2001), paragraphs [0028] to [0030] (Family: none) | 1-11 |

☐ Further documents are listed in the continuation of Box C.          ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 29 October, 2012 (29.10.12) | 06 November, 2012 (06.11.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010190635 A